(19) **Europäisches Patentamt European Patent Office Office européen des brevets**

(11) **EP 3 304 047 B1**

(12) **FASCICULE DE BREVET EUROPEEN**

(45) Date de publication et mention de la délivrance du brevet:
**14.08.2019 Bulletin 2019/33**

(21) Numéro de dépôt: **16729835.5**

(22) Date de dépôt: **07.06.2016**

(51) Int Cl.:
*G01N 21/55* (2014.01)     *G01N 21/57* (2006.01)
*G06T 7/00* (2017.01)      *G06T 15/50* (2011.01)
*G06T 7/73* (2017.01)

(86) Numéro de dépôt international:
**PCT/EP2016/062877**

(87) Numéro de publication internationale:
**WO 2016/198389 (15.12.2016 Gazette 2016/50)**

(54) **PROCÉDÉ DE TRAITEMENT D'IMAGES AVEC SPECULARITÉS ET PRODUIT PROGRAMME D'ORDINATEUR CORRESPONDANT**

**VERFAHREN ZUR VERARBEITUNG VON BILDERN MIT GLANZ UND ENTSPRECHENDES COMPUTERPROGRAMMPRODUKT**

**METHOD FOR PROCESSING IMAGES HAVING SPECULARITIES AND CORRESPONDING COMPUTER PROGRAM PRODUCT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2015 FR 1555194**

(43) Date de publication de la demande:
**11.04.2018 Bulletin 2018/15**

(73) Titulaire: **Commissariat à l'Énergie Atomique et aux Énergies Alternatives 75015 Paris (FR)**

(72) Inventeurs:
• **TAMAAZOUSTI, Mohamed 92140 Clamart (FR)**
• **MORGAND, Alexandre 94200 Ivry-sur-seine (FR)**
• **BARTOLI, Adrien 63000 Clermond-Ferrand (FR)**

(74) Mandataire: **Henriot, Marie-Pierre Marks & Clerk France Conseils en Propriété Industrielle Immeuble Visium 22, Avenue Aristide Briand 94117 Arcueil Cedex (FR)**

(56) Documents cités:
**US-A1- 2002 152 478     US-A1- 2003 011 596
US-A1- 2006 244 719     US-A1- 2014 307 951**

• **MORGAND ALEXANDRE ET AL: "Generic and real-time detection of specular reflections in images", 2014 INTERNATIONAL CONFERENCE ON COMPUTER VISION THEORY AND APPLICATIONS (VISAPP), SCITEPRESS, vol. 1, 5 janvier 2014 (2014-01-05), pages 274-282, XP032792001,**
• **GERULES GEORGE ET AL: "A survey of image processing techniques and statistics for ballistic specimens in forensic science", SCIENCE AND JUSTICE, HARROGATE, GB, vol. 53, no. 2, 11 août 2012 (2012-08-11), pages 236-250, XP028583351, ISSN: 1355-0306, DOI: 10.1016/J.SCIJUS.2012.07.002**
• **ROBERT J. WOODHAM: "Gradient and curvature from the photometric-stereo method, including local confidence estimation", JOURNAL OF THE OPTICAL SOCIETY OF AMERICA A, vol. 11, no. 11, 1 novembre 1994 (1994-11-01), page 3050, XP055004116, ISSN: 1084-7529, DOI: 10.1364/JOSAA.11.003050**

**Description**

Le domaine de l'invention est celui du traitement d'images présentant des spécularités.

On observe une réflexion de la lumière lorsque les ondes électromagnétiques visibles rencontrent une surface qui n'absorbe pas toute leur énergie de radiation et en repousse une partie. Quand les imperfections d'une surface sont plus petites que la longueur d'onde de la lumière incidente (c'est le cas d'un miroir, par exemple), la totalité de la lumière est réfléchie de manière spéculaire (c'est-à-dire que l'angle de réflexion de la lumière est égal à son angle d'incidence). Ce phénomène provoque dans des images des taches spéculaires, éléments visibles sur de nombreux matériaux.

En général, ces spécularités ne sont pas prises en compte dans les algorithmes de vision par ordinateur car elles sont fortement dépendantes du point de vue, des matériaux présents dans la scène, des réglages de la caméra (temps d'exposition, ouverture) et de la géométrie de la scène. Ces spécularités sont également dépendantes de la forme de la source lumineuse (ampoule, néon).

Or ces spécularités présentent un intérêt majeur dans différents contextes. Pour les applications de Réalité Augmentée (RA) comme l'aide à la vente, l'insertion d'éléments virtuels dans une scène réelle doit être la plus naturelle possible pour permettre une expérience utilisateur optimale. En effet, cette insertion doit être stable et inclure les traces de la lumière (le contexte lumineux de la scène) comme les spécularités et les ombres, éléments essentiels d'un rendu réaliste.

Par ailleurs, pour la problématique de localisation temps réel de caméra, les algorithmes actuels peuvent être perturbés par les spécularités. En effet, ces algorithmes s'appuient sur un suivi temporel de primitives (généralement points d'intérêts). Celles-ci peuvent être complètement ou partiellement occultées par les spécularités. Les méthodes actuelles limitent, dans une certaine mesure, le problème en utilisant des algorithmes d'estimation robuste qui considèrent alors ces zones de l'image comme du bruit. Néanmoins, pour certains points de vue, ces spécularités peuvent saturer la caméra et mettre en échec les algorithmes de localisation. Idéalement, ces spécularités devraient être considérées comme des primitives à part entière pouvant apporter de nombreuses informations complémentaires pour renforcer ces algorithmes de localisation.

Ces traces de lumière peuvent également jouer un rôle important dans la compréhension et la modélisation du comportement de la lumière dans une scène. En effet, on peut déduire de ces spécularités la géométrie d'une surface sur laquelle elles se manifestent. Les spécularités peuvent alors être utilisées pour des applications de contrôle qualité afin de vérifier l'intégrité d'une surface 3D lors de la fabrication de pièces industrielles.

La prédiction de ces traces de lumières et en particulier la prédiction des spécularités présente un intérêt majeur pour les applications citées précédemment. Cependant, il s'agit d'un problème difficile car les spécularités dépendent du point de vue de l'observateur, de la position, la forme et l'intensité des sources primaires de lumière ainsi que des propriétés de réflectance des matériaux sur lesquels elles se manifestent.

L'état de l'art concernant l'estimation de lumière à partir d'image se décompose en deux catégories : la modélisation de l'illumination globale et la reconstruction de sources primaires.

La lumière est un élément essentiel à la formation d'une image. En effet, celle-ci est le résultat de l'interaction entre des sources de lumière et des objets de différents matériaux pour un capteur donné (oeil, caméra). Cette lumière est émise par une ou plusieurs sources lumineuses dont on distingue deux types :

- Les sources primaires correspondant à des corps qui produisent la lumière qu'ils émettent. On trouve dans cette catégorie des corps ayant une température très élevée comme le soleil, les flammes, des braises incandescentes ou encore un filament d'une lampe à incandescence.
- Les sources secondaires ou diffusantes correspondant à des corps qui ne produisent pas de lumière mais qui renvoient la lumière reçue. La diffusion est un phénomène au cours duquel un corps, associé à un matériau, ayant reçu de la lumière, la renvoie totalement ou partiellement dans toutes les directions. La quantité de lumière diffusée dépend des propriétés des matériaux des objets recevant la lumière. Un objet diffusant n'est donc une source de lumière que lorsqu'il est lui-même éclairé par une source primaire ou par un autre objet diffusant.

Dans leur approche de modélisation de l'illumination globale, Jacknik et. al. proposent dans la publication « Real-Time Surface Light-field Capture for Augmentation of Planar Specular Surface » ISMAR 2012, une reconstruction indirecte de l'illumination globale sous forme d'une carte de l'environnement lumineux à partir de toutes les images d'une séquence vidéo. Cette reconstruction est utilisée pour un rendu photo-réaliste après une phase d'initialisation sur une surface planaire à matériau spéculaire. Cependant, cette méthode est limitée car elle ne fait aucune distinction entre sources primaires et secondaires. En conséquence, cette méthode ne permet pas de prédire les spécularités sur des points de vue inconnus.

L'approche d'estimation d'illumination globale de Meilland et. al. décrite dans la publication « 3D High Dynamic Range Dense Visual SLAM and its Application to Real-Time Object Re-Lighting » ISMAR 2013, présente une reconstruction d'une source primaire (sous forme ponctuelle) en filmant directement la lumière dans la scène. Cependant, cette méthode est peu adaptée à des types d'éclairage plus complexe comme le néon représenté par un ensemble de sources ponctuelles. De plus, il n'y a pas de gestion de la lumière dynamique (allumée, éteinte) et pas de prise en compte des matériaux pour les spécularités. En conséquence, cette méthode ne permet pas de prédire les spécularités sur des points de vue inconnus.

La reconstruction de sources primaires selon la méthode de Lagger et. al. décrite dans la publication « Using Specularities to Recover Multiple Light Sources in the Presence of Texture » ICPR 2006, présente une reconstruction de la direction de la source primaire à partir des spécularités sur un objet mobile observé d'un point de vue fixe. Cette application est limitée ; en effet, comme les spécularités dépendent du point de vue il faut les ré-estimer à chaque position. De plus, ni la position, ni la forme de la lumière ne sont estimées et le matériau n'est pas pris en compte. En conséquence, cette méthode ne permet pas de prédire les spécularités sur des points de vue inconnus.

L'approche de Boom et. al. décrite dans la publication « point Light Source Estimation based on Scenes Recorded by a RGB-D caméra » BMVC 2013, détaille une méthode d'estimation d'une lumière primaire considérée ponctuelle à partir d'une surface Lambertienne (non réfléchissante) en utilisant un capteur RGB-D (« Red Green Blue-Depth »). Cette approche utilise uniquement la composante diffuse pour estimer la source ponctuelle en comparant un rendu de synthèse avec la scène réelle afin de s'approcher le plus possible de la scène réelle. Cependant, cette méthode n'est pas adaptée pour du temps réel, et ne permet pas de gérer des néons mais seulement des sources ponctuelles, ni de gérer la présence de spécularités (hypothèse de surfaces Lambertiennes). De plus, cette méthode est limitée à une source de lumière sans estimer sa forme et sans prendre en compte la composante spéculaire des matériaux. Cette méthode ne permet pas de prédire les spécularités à partir de points de vue inconnus.

Concernant la prédiction de spécularités, il n'existe pas de méthode connue.

En conséquence, il demeure à ce jour un besoin pour un procédé de traitement d'images présentant des spécularités permettant éventuellement de prédire des spécularités en d'autres points de vue.

Le document US 2014/307951 A1 concerne la vision par ordinateur et la détermination des caractéristiques des sources lumineuses éclairant une scène sur la base des images vidéo, qui est nécessaire dans des applications de vision par ordinateur. La réflexion spéculaire définit par exemple une ellipse sur la surface, ce qui permet de déterminer la lumière incident de la réflexion spéculaire. De cette façon, les positions des sources de lumière éclairant la surface sont déterminées en utilisant une pluralité des images réfléchie spéculaire par exemple dans un clip vidéo.

Le procédé de traitement d'images incluant des spécularités selon l'invention, s'appuie sur la construction d'un nouveau modèle combinant les informations des sources lumineuses (intensité, position et forme), la réflectance des matériaux sur lesquels se forment les spécularités, et éventuellement la rugosité de la surface. D'un point de vue technique, on reconstruit une source lumineuse sous une forme 3D générique en l'occurrence une quadrique (sphère, ellipsoïde, cylindre voire point). Ce modèle empirique de source lumineuse qui est symétrique de la source lumineuse réelle par rapport à la surface, est reconstruit à partir d'images présentant des spécularités observées sur une surface planaire d'un matériau donné, ces images étant obtenues pour des poses de caméra (ou plus généralement d'un capteur d'images) données. À l'aide d'un détecteur de spécularités temps-réel et d'un procédé de localisation de caméra, le modèle est reconstruit sous forme d'une quadrique pouvant représenter aussi bien une ampoule ou un néon.

Le modèle construit permet la prédiction d'une spécularité dans des images issues d'un nouveau point de vue de la scène incluant une surface constituée de ce matériau. En effet, ce modèle inclut la position, l'intensité et la forme de la source lumineuse ainsi que la réflectance du matériau et éventuellement la rugosité de la surface où la spécularité se présente. La zone prédite pour la spécularité correspond à une conique issue de la projection de la quadrique reconstruite pour la nouvelle pose de caméra donnée.

Plus précisément l'invention a pour objet un procédé de traitement d'images d'une scène incluant une surface constituée d'un matériau de réflectance inconnue, selon la revendication 1.

Ce procédé permet :

- d'inclure conjointement des informations sur les sources lumineuses et les propriétés des matériaux de la scène,
- de prédire les zones spéculaires pour de nouveaux points de vue pour un même matériau,
- de gérer plusieurs formes de lumières (ampoules et néons),
- d'estimer plusieurs sources de lumière simultanément,
- d'affiner constamment le modèle, sous forme de quadrique, avec de nouveaux points de vue,
- de donner des informations complémentaires au procédé de localisation de caméra,
- de mettre à jour l'état des sources lumineuses (allumées, éteintes),
- de s'affranchir de toute phase d'apprentissage préalable,
- de fonctionner en temps réel sur CPU.

Finalement, on obtient une construction d'un modèle combinant des informations sur la source lumineuse et les matériaux de la scène et qui permet aussi une prédiction des zones spéculaires en temps réel et de façon précise.

Lorsque la scène est éclairée par au moins une autre source lumineuse, et que chaque image présente au moins une spécularité issue de la réflexion de chaque autre source lumineuse sur ladite surface, le procédé comprend en outre pour chaque spécularité :

- un suivi temporel de la spécularité et
- une mise en correspondance de ladite spécularité et donc de la conique l'approximant, avec une source lumineuse,

et l'étape de construction d'une quadrique est réalisée pour chaque source lumineuse, à partir des coniques mises en correspondance avec ladite source lumineuse, de la position et de l'orientation du capteur d'images lors de l'acquisition des images présentant les spécularités respectivement approximées par ces coniques.

Il comporte de préférence en outre les étapes suivantes :

- pour chaque spécularité, minimisation de distance entre la spécularité, et une conique résultante de la projection de la quadrique sur l'image présentant ladite spécularité, selon un axe déterminé par la position et l'orientation du capteur, pour déterminer une nouvelle quadrique,
- itérations de l'étape précédente jusqu'à atteindre un critère d'arrêt prédéterminé, la nouvelle quadrique résultant de la dernière itération étant une quadrique affinée représentant la position, l'intensité et la forme de la source lumineuse ainsi que la réflectance du matériau.

Il comporte avantageusement une étape de choix d'images clés parmi les images acquises, en fonction d'un critère prédéfini de répartition de points de vue du capteur dans la scène.

Lorsqu'une source lumineuse est ponctuelle, la quadrique correspondante est une sphère. Et lorsqu'elle est étendue, la quadrique correspondante est un ellipsoïde.

Il peut aussi comporter une étape de calcul de prédiction de la position et de la forme d'une conique (dite conique prédite) approximant une spécularité formée sur une surface constituée d'un matériau de normale connue, en fonction d'une nouvelle position et d'une nouvelle orientation dudit capteur d'images lors de l'acquisition d'une nouvelle image et de la projection de la quadrique sur ladite nouvelle image.

Lorsque le matériau de la spécularité prédite est le même que le matériau associé à la quadrique, la taille de la spécularité est également prédite.

Des échelles de projection de la quadrique étant prédéterminées, le calcul de prédiction de conique est avantageusement réalisé pour chaque échelle de manière à obtenir autant de coniques que d'échelles, chaque conique correspondant à un niveau d'intensité de la spécularité prédite.

Selon une caractéristique de l'invention, il comporte une étape de correction d'erreur de position et d'orientation du capteur à partir d'un calcul d'écart entre une spécularité présente dans l'image associée à ladite position et orientation et une conique résultant de la projection de la quadrique sur ladite image.

Selon une autre caractéristique de l'invention, les positions et orientations différentes du capteur sont obtenues à partir d'un même capteur se déplaçant ou à partir de plusieurs capteurs fixes.

L'invention a aussi pour objet un produit programme d'ordinateur, selon la revendication 13.

D'autres caractéristiques et avantages de l'invention apparaîtront à la lecture de la description détaillée qui suit, faite à titre d'exemple non limitatif et en référence aux dessins annexés dans lesquels :

la figure 1 représente un organigramme des principales étapes du procédé selon l'invention,
la figure 2 représente schématiquement un exemple de spécularité sur une surface plane pour un rayon incident en utilisant un modèle de Phong,
la figure 3 illustre un exemple de texture et de spécularité sur deux images prises en deux points de vue différents,
la figure 4 illustre deux approximations différentes d'une spécularité par une ellipse,
la figure 5 représente schématiquement les liens entre une source lumineuse et une surface plane présentant des spécularités, et le modèle virtuel correspondant selon l'invention,
les figures 6a et 6b représentent schématiquement une source lumineuse ponctuelle (image de gauche) et une source étendue représentée par un ensemble de sources ponctuelles sur un segment générant sur une surface planaire des taches spéculaires englobées dans une ellipse (image de droite),
les figures 7 représentent schématiquement deux exemples de distances entre une spécularité et une ellipse correspondante, avec la distance point/point (figure 7a) et la distance de Jaccard (figure 7b),
la figure 8 illustre plusieurs niveaux d'intensité d'une spécularité respectivement représentés par des coniques,
la figure 9 représente schématiquement plusieurs quadriques concentriques correspondant respectivement à plusieurs échelles, chaque quadrique projetée étant une conique associée à un niveau d'intensité de la spécularité prédite.

D'une figure à l'autre, les mêmes éléments sont repérés par les mêmes références.

Dans la suite de la description, les expressions « haut », « bas », sont utilisées en référence à l'orientation des figures décrites. Dans la mesure où le capteur d'images peut être positionné selon d'autres orientations, la terminologie directionnelle est indiquée à titre d'illustration et n'est pas limitative.

La connaissance des sources primaires est essentielle pour une meilleure compréhension de la scène. Pour retrouver ces sources primaires, plusieurs traces de la lumière, comme les ombres et les spécularités, observables dans des images, peuvent être utilisées.

1. Les ombres correspondent à des zones occultées par un objet opaque dans une scène. Ces éléments dépendent de la taille de l'objet occultant et de sa distance par rapport aux sources primaires. De plus, elles sont fortement influencées par la forme de celles-ci.
2. Les spécularités correspondent à une réflexion totale de la source primaire sur une surface réfléchissante. Ces traces sont dépendantes du point du vue et des matériaux sur lesquelles elles sont observées.

Un capteur de lumière (oeil, caméra) est sensible à ces traces de la lumière. Ce sont d'ailleurs celles-ci qui aident généralement l'humain à interpréter la scène (notamment les informations de profondeur, la cohérence de la scène...).

Pour les applications de vision par ordinateur, la lumière est donc un élément essentiel. La connaissance de celle-ci peut avoir un intérêt dans différentes applications :

- Pour les applications de réalité augmentée, le réalisme est fortement dépendant de l'insertion virtuelle de ces traces de la lumière.
- Les algorithmes utilisés dans le domaine de la localisation de caméra peuvent être perturbés par la présence de spécularités. La connaissance de ces éléments pourrait améliorer ces algorithmes.
- Pour la vérification de propriétés d'un objet (géométrie, matériaux) dans le domaine du contrôle industriel.

Le procédé selon l'invention repose sur une méthode de construction d'un modèle virtuel permettant de modéliser à la fois les sources de lumières de différentes formes (ampoules, néons, ...), la réflectance d'un matériau et éventuellement la rugosité de la surface, à partir de réflexions spéculaires sur une surface planaire de ce matériau ; cette surface planaire peut être courbée. Ces réflexions spéculaires sont sensibles aux propriétés de la lumière (forme, intensité, position) ainsi qu'aux propriétés du matériau sur lequel elles sont représentées. Construire un modèle à partir des spécularités implique également une inclusion des propriétés de réflectance du matériau. La construction de ce modèle virtuel va permettre d'estimer les spécularités par projection du modèle pour des points de vue inconnus.

Les sources de lumière considérées sont fixes et ne sont généralement pas très éloignées de la surface présentant les spécularités, comme c'est le cas de sources lumineuses situées à l'intérieur d'un bâtiment ou pour un lampadaire extérieur. Notons néanmoins qu'une source à l'infini comme le soleil par exemple peut également être modélisée par le procédé.

Les images avec spécularités qui sont traitées par le procédé selon l'invention sont acquises par un capteur dont les paramètres intrinsèques (focale et point central) sont connus.

On considère que les poses du capteur d'images sont connues pour chaque image ; est aussi connu un modèle 3D de la scène où l'on utilise seulement la normale au plan (ou les normales aux plans) sur lequel sont situées les spécularités. Ces images peuvent être obtenues par un capteur en déplacement selon une trajectoire connue, les images pouvant elles-mêmes être obtenues en mode vidéo ou en mode manuel à des instants plus décalés, ou par plusieurs capteurs fixes localisés en différentes localisations connues.

Les primitives utilisées pour la construction du modèle de source incluant la réflectance du matériau, correspondent aux réflexions spéculaires dans une image. Ces spécularités sont provoquées par la réflexion des sources lumineuses sur une surface réfléchissante (non-Lambertienne). On peut noter que les propriétés de la source lumineuse comme sa taille, sa position et sa forme influencent la forme de la spécularité sur une surface. De plus, en fonction de la réflectance du matériau, la taille de la spécularité est également modifiée. La connaissance de ces éléments est essentielle pour pouvoir prédire la forme de la spécularité pour des points de vue inconnus.

Dans le cas d'une surface planaire, une spécularité correspond au reflet d'une source de lumière par rapport à un matériau spéculaire (un matériau parfaitement spéculaire correspondrait à un miroir). Cette propriété est importante car elle permet d'identifier rapidement le nombre de sources lumineuses dans une scène. De plus, le suivi de ces spécularités permet d'observer l'état temporel des sources de lumière associées à ces traces.

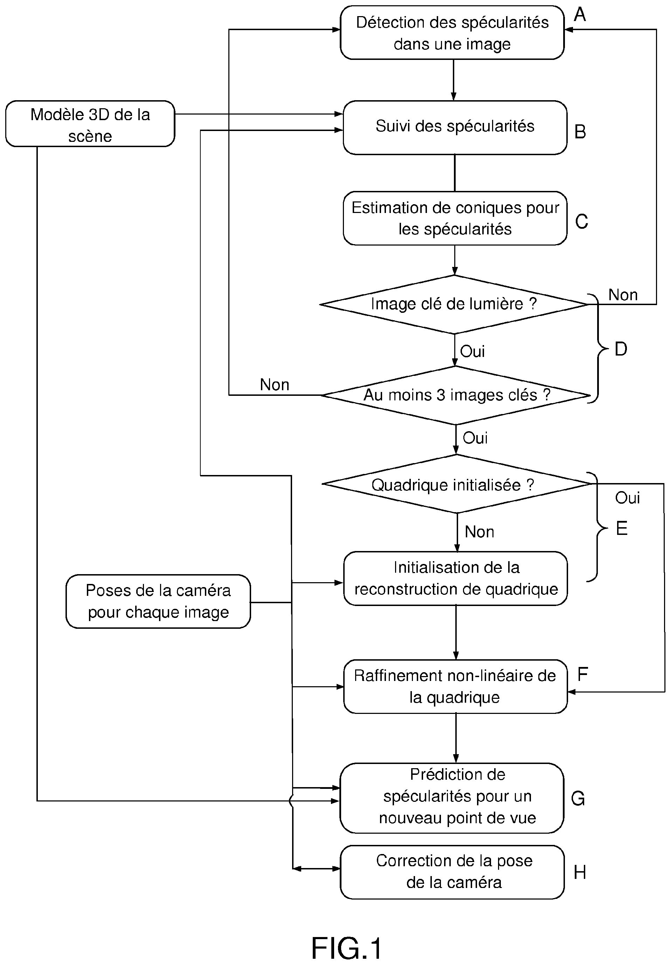

A partir d'images obtenues par un capteur en au moins 3 positions différentes, les positions et les orientations correspondantes du capteur étant connues, la construction du modèle comporte des étapes montrées dans l'organigramme de la figure 1 :

A. Détection de spécularités

Cette étape consiste à détecter des spécularités dans une image. A l'issue de cette étape, l'image résultante est en niveau de gris. Ces spécularités sont détectées à partir de la méthode décrite dans la publication des inventeurs « Generic and real-time détection of specular reflections in images" VISAPP, 2014. Cette approche se base sur le constat que ces spécularités ressortent davantage dans l'espace colorimétrique Teinte-Saturation-Valeur (TSV) que par exemple dans l'espace RGB. En effet, les spécularités se manifestent pour des valeurs hautes dans le canal Valeur et pour des valeurs basses pour le canal Saturation.

A partir de ce constat, cette étape repose sur un seuillage automatique des canaux Valeur et Saturation en fonction de la luminosité calculée dans l'image. Afin de maximiser les résultats, un pré-traitement (= avant seuillage) et post-traitement (= après seuillage) sont implémentés.

Le pré-traitement permet d'anticiper les images difficiles (dues à une surexposition de la caméra, une sous-exposition, ou des changements brusques de la lumière, etc) en fonction de la luminosité calculée dans l'image. Une égalisation de contraste est appliquée afin de faire ressortir davantage les spécularités dans le cas d'une sous-exposition et de limiter la saturation de l'image lors d'une surexposition. L'image résultante de ce pré-traitement permet une détection dans de meilleures conditions mais permet également d'anticiper des images difficilement exploitables pour des méthodes de localisation du capteur dans une séquence vidéo. En effet, le capteur (oeil, caméra) est très sensible aux variations de la lumière qu'il reçoit.

Le post-traitement a pour objectif de filtrer les différents candidats résultant du seuillage. Après une égalisation du contraste, certaines zones dans l'image restent faussement détectées pour une image surexposée notamment. En effet, une texture blanche renvoie une grande quantité de lumière, ce qui peut fausser la détection, son intensité lumineuse étant très élevée. Pour répondre à ce problème, une méthode pour séparer les taches spéculaires des textures ambiguës est implémentée.

En observant l'image dans le canal Valeur du TSV, il est facile de constater, pour chaque spécularité, une décroissance progressive de l'intensité de celle-ci à partir de son centre. Afin d'exploiter ce critère, l'image est divisée en k-régions de candidats spéculaires. Cette segmentation est réalisée en utilisant un procédé classique de segmentation d'image binaire ; on peut par exemple utiliser le procédé tel que décrit dans la publication de Suzuki and Satoshi « Topological structural analysis of digitized binary images by border following » Computer Vision, Graphics, and Image Processing, 30(1) :32-46, 1985. On prend la boîte englobante de plus grande taille pour chaque contour. En effet, une spécularité n'est pas uniforme et est généralement très fragmentée. En utilisant une boîte englobante, ces fragments sont inclus dans le calcul. Dans un second temps, en modifiant progressivement le seuil sur le canal de Valeur d'un pas unitaire pour chaque itération, une évolution de l'aire de ces boîtes englobantes est observée. Si cette évolution est constante (équivalente à une décroissance légère et régulière de l'intensité), ce candidat est considéré comme une spécularité. Si l'aire décroît soudainement, ce candidat représente probablement une texture et a donc été détecté à tort comme étant spéculaire.

B. Suivi des spécularités

Chaque spécularité est associée à une source de lumière. Afin de suivre l'état des sources lumineuses en temps réel, un suivi temporel de chaque spécularité est réalisé à partir du contour de chacune d'elles sur des images successives afin de suivre l'évolution de ces contours. Pour deux images successives, si le contour précédent et actuel se coupent, alors le contour est mis à jour et la spécularité est suivie. Si le contour disparait par rapport à l'image précédente, la spécularité n'est plus suivie (contour mal détecté, lumière qui s'éteint). Ce suivi permet de mettre en correspondance en temps réel chaque spécularité avec une source lumineuse se reflétant sur la surface spéculaire et qui est à l'origine de cette spécularité d'une image à l'autre. Il s'agit en quelque sorte d'indexer chaque spécularité avec un index spécifique de la source lumineuse à l'origine de ladite spécularité.

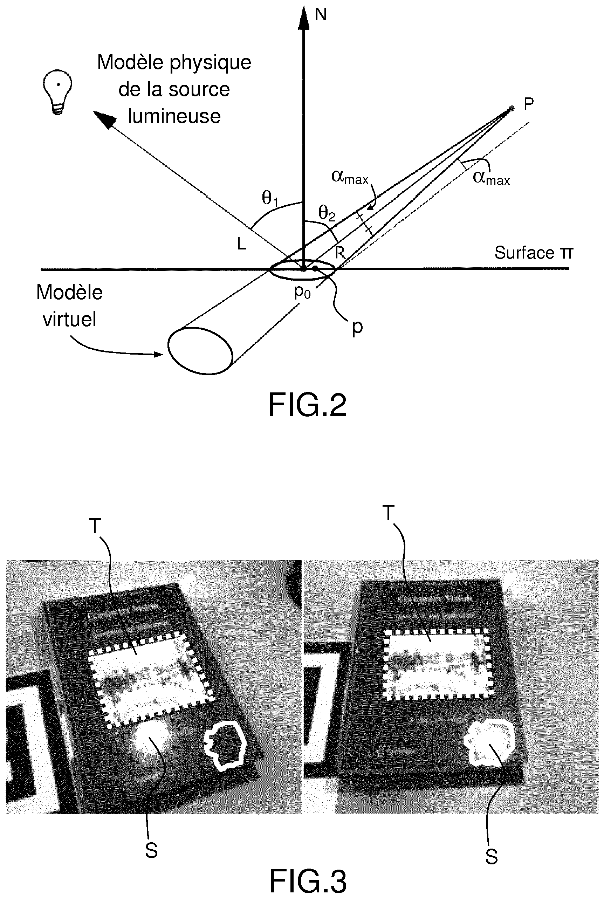

De plus, ce suivi permet de filtrer des spécularités faussement détectées dans une image. En effet, les textures blanches en présence d'une lumière forte renvoient la lumière en grande quantité ce qui peut faire saturer l'image et être considéré au même titre qu'une spécularité. Cependant, pour plusieurs images, la texture blanche reste de position fixe dans la scène 3D contrairement à la spécularité qui, dépendante du point de vue du capteur, va se déplacer dans la scène. Le principe du filtrage repose sur la dépendance du contour 3D de la spécularité issu du modèle 3D de la scène, par rapport à la position du capteur. On utilise la méthode du Warping qui consiste à calculer l'homographie entre deux images pour les candidats spéculaires à partir des poses (= position et orientation) du capteur pour ces images. Le candidat est considéré comme une texture si son contour 3D n'a pas bougé dans la scène ; il est considéré comme une spécularité si son contour 3D s'est déplacé comme illustré figure 3. Le contour en pointillé du candidat situé au centre du livre n'a pas bougé dans la scène entre l'image de droite prise en un premier point de vue et l'image de gauche prise en un deuxième point de vue et ce candidat doit être considéré comme une texture T ; le contour en trait plein du candidat en bas à droite du livre s'est déplacé dans la scène entre l'image de droite et l'image de gauche, c'est donc une spécularité S. Pour obtenir ce contour 3D, on prend chaque point de contour 2D et on effectue un lancer de rayon sur le modèle 3D de la scène à partir de la pose du capteur de l'image associée. L'intersection entre la surface et ces rayons donne un contour 3D qu'on analyse pour chaque image.

C. Estimation de coniques représentant les spécularités

Selon la demanderesse, sur une surface planaire, une spécularité entière (qui n'est pas coupée) se présente comme une ellipse pour des sources lumineuses diverses (ampoules, néons). Plus généralement, une spécularité se présente comme une conique mais dans la suite de la description on va considérer qu'il s'agit d'une ellipse. Cette propriété se base sur le modèle physique de réflexion décrit par Phong et al. dans la publication « Illumination for computer generated pictures » Communications of the ACM, 18(6):311-317, 1975, en se focalisant uniquement sur la partie spéculaire de l'équation de Phong qui donne l'intensité d'un point 3D p tel que :

$$I_s(p) = i_s k_s \left\| \hat{R} \right\| \left\| \hat{V} \right\| \cos^n \alpha \, ,$$

avec $\hat{R}$ la direction normalisée d'un rayon parfaitement réfléchi, $\hat{v}$ la direction normalisée orientée vers le capteur, n la brillance (coefficient de réflexion de la lumière) du matériau pour lequel le rayon coupe le plan, $k_s$ le ratio de réflexion de l'intensité de la lumière, $\alpha$ l'angle entre R et V et $i_s$ l'intensité incidente sur la surface.

Considérons un angle constant $\alpha$ et un plan $\pi$ de matériau spéculaire. Ainsi, pour cet angle, la valeur de $I_s(p)$ est constante. À partir de l'équation de Phong, on peut noter qu'il existe une intensité maximale au point $p_0$ telle que

$$\exists p_0 \in \pi, I_s(p_0) = i_s k_s \Leftrightarrow \alpha = 0$$

D'après le principe de Fermât, le chemin d'un rayon de lumière entre deux points est toujours le chemin le plus court possible. La loi de réflexion de Snell-Descartes peut être dérivée de ce principe : l'angle $\theta_1$ entre la normale N et le vecteur L, et l'angle $\theta_2$ entre la normale N et le vecteur R sont égaux. Ce principe implique que le plan incident contenant N, L et R est orthogonal à $\pi$. On va appliquer ce principe à partir de deux types de sources, les sources ponctuelles et les sources étendues.

Pour une source ponctuelle telle qu'une ampoule : dans le modèle de Phong, pour un angle $\alpha$ donné, en considérant R comme étant le bras fixe et V (défini par le centre optique P et p un point de la spécularité sur $\pi$) le bras de longueur variable, on peut dessiner une conique sur le plan $\pi$ en utilisant un compas parfait virtuel tel que décrit par exemple dans la publication de J. Van Maanen « Seventeenth century instruments for drawing conic sections" The Mathematical Gazette, pages 222-230, 1992.

Il est intéressant de noter que le point $p_0$ n'est pas situé au centre de l'ellipse de la spécularité. On peut considérer qu'il existe un angle de coupure $\alpha_{max}$ tel que :

$$\exists \alpha_{max}, \alpha > \alpha_{max} \Leftrightarrow I_s(p) = 0$$

De plus, cet angle de coupure implique qu'il existe un seuil $\tau$ tel que :
$\forall p \in S, I_s(p) > \tau$, avec S l'ensemble des points spéculaires.
Ainsi, dans le modèle de Phong, la demanderesse a prouvé qu'une source ponctuelle de lumière émet une spécularité sous la forme d'une conique sur le plan en utilisant $\alpha_{max}$, $\tau$ et le compas parfait comme illustré figure 2. En effet, d'après le principe de Fermât, le chemin d'un rayon de lumière est toujours le plus court. Ainsi, le plan formé par le rayon incident et réfléchi (plan d'incidence) est perpendiculaire au plan $\pi$ (surface réfléchissante) qui peut être associé à la surface de dessin du compas parfait. Si une spécularité est visible entièrement dans l'image sur le plan $\pi$ alors la spécularité est de forme elliptique.

Dans la littérature, pour une source étendue telle qu'un néon, on considère la source étendue comme un segment discrétisé de sources ponctuelles. On sait que ces sources ponctuelles produisent des spécularités sous forme elliptique sur une surface planaire à matériau réfléchissant. Si on considère une discrétisation de ce segment en sources lumineuses ponctuelles de manière infinie, alors on peut approcher les taches spéculaires par une ellipse englobante. Ainsi, pour une source de lumière étendue, la spécularité obtenue est également de forme elliptique.

Ainsi, pour chaque type de source lumineuse, pour une surface plane spéculaire, on peut représenter ces spécularités (entières) comme des ellipses.

Selon la qualité de la détection, deux approches d'estimation d'ellipses à partir d'une image en niveau de gris fournie par le détecteur de spécularités à l'issue de l'étape A, sont possibles :

- Estimation d'ellipse englobante qui permet d'obtenir des ellipses précises pour des détections avec peu d'erreur comme indiqué dans la publication de L.G. Khachiyan, M.J. Todd, « On the complexity of approximating the maximal inscribed ellipsoid for a polytope », Math. Programming 61 (1993)137-159.
- Estimation d'ellipse adaptée qui permet de limiter les erreurs potentielles dues à la détection comme indiqué dans la publication de A. W. Fitzgibbon, R. B. Fisher, et al. « A buyer's guide to conic fitting ». DAI Research paper, 1996.

D. Choix d'images clés pour la lumière

Dans un souci de rapidité d'exécution et de précision de l'estimation, les étapes de construction et d'optimisation du modèle ne sont pas réalisées à chaque image mais uniquement à certaines images appelées « image clés ». Elles sont choisies en effectuant un compromis entre la qualité des spécularités détectées dans les images et un critère d'angle.

Il est important d'avoir des images clés correspondant à des points de vue répartis sur la scène. A partir des angles réfléchis obtenus précédemment on fixe un seuil (par exemple expérimentalement) entre l'angle réfléchi de l'image actuelle et chaque angle des images clés déjà existantes afin d'obtenir des points de vues éloignés tels qu'il n'y ait pas d'intersection entre la spécularité détectée dans une image clé et celle de l'image clé suivante. Ces images clés peuvent être obtenues directement (sans tri a posteriori) lorsqu'on utilise par exemple des capteurs fixes déjà localisés en des endroits suffisamment distants pour respecter ce critère de points de vue éloignés.

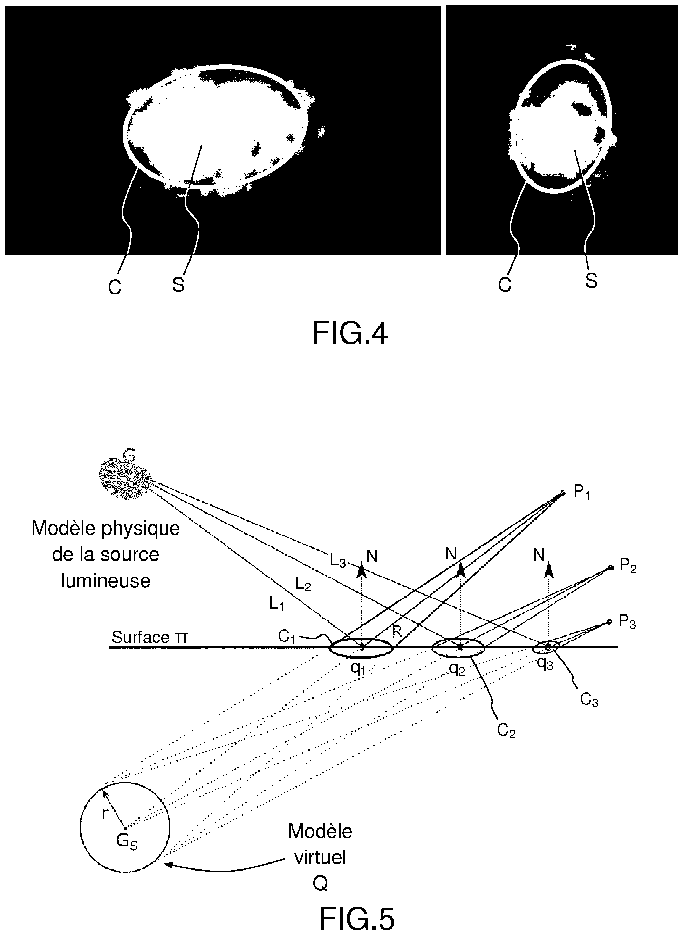

Tous ces critères permettent d'avoir des points de vue optimaux pour la construction du modèle. Par ailleurs, la granularité d'une surface spéculaire peut influencer la forme de la spécularité. Par conséquent, il peut être difficile d'obtenir une ellipse correspondant exactement à la spécularité comme illustré figure 4 où l'on peut remarquer que l'ellipse C calculée correspond mieux au contour de la spécularité S dans l'image de gauche que dans l'image de droite. La qualité des spécularités est estimée en comparant le contour de la spécularité issue du détecteur (= de la détection de l'étape A) avec l'ellipse calculée pour cette spécularité. Cette qualité est estimée par une distance point/point entre les points du contour de la spécularité et l'ellipse estimée. La distance de Jaccard peut également être utilisée afin de comparer la similitude entre l'aire de la spécularité et l'aire de l'ellipse. Le détail de ces distances est développé dans l'étape d'optimisation.

E. Initialisation

Dans le modèle de Phong, la direction de la lumière ponctuelle, ainsi que son intensité, doivent être estimées directement à partir d'une source ponctuelle. Selon la formule de Phong, on sait qu'une spécularité est influencée en taille en fonction de l'intensité de la source lumineuse. En pratique, le calcul de cette intensité n'est pas trivial car le capteur est très sensible aux variations de lumière et l'intensité perçue peut varier.

On propose de reconstruire un modèle empirique de sources lumineuse comme un volume virtuel. Ce modèle inclut l'intensité et la forme de la source lumineuse et les propriétés des matériaux en reconstruisant une quadrique à partir des coniques estimées sur les spécularités associées à cette source lumineuse.

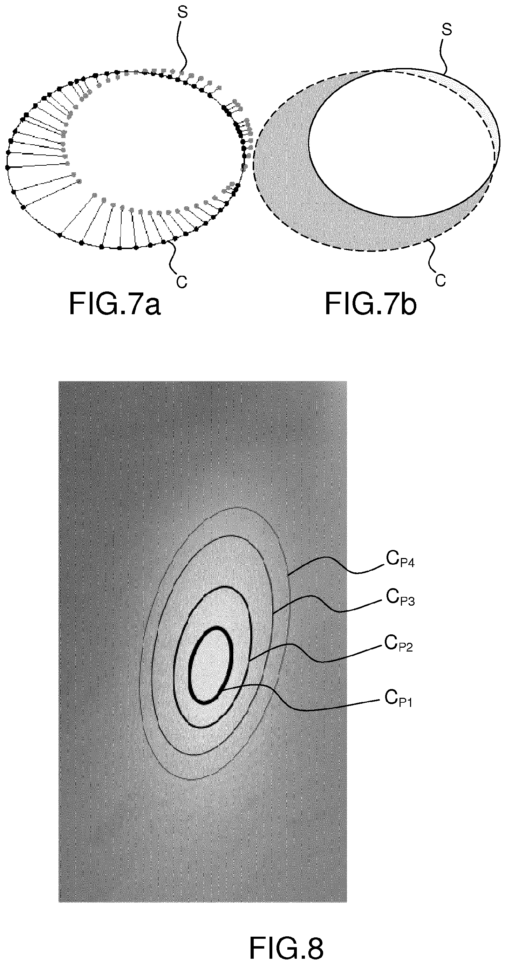

Pour une source ponctuelle (ampoule), le modèle selon l'invention donne une équivalence à cette source lumineuse ponctuelle sous forme d'une sphère comme montré figure 5. En effet, pour une source ponctuelle omnidirectionnelle à une position fixe G, il existe un point $p_0 \in \pi$ tel que l'angle entre la normale et le rayon incident est égal à celui entre la normale entre le rayon réfléchi selon le principe de Snell-Descartes. Dans le modèle de Phong, $p_0$ est un point sur la surface d'intensité maximale. Dans la figure 5, l'intersection des rayons $P_1 q_1$, $P_2 q_2$ et $P_3 q_3$ correspond à $G_s$ le symétrique de G par rapport à $\pi$ ; $P_1$, $P_2$, $P_3$ sont les différentes positions du capteur, $q_1$, $q_2$ et $q_3$ étant les points d'intensité maximale des ellipses $C_1$, $C_2$, $C_3$ correspondantes. Le point d'intensité maximale n'est pas nécessairement au centre de la conique comme on peut le voir figure 8. On revient à la figure 5. Pour chaque point de vue, sur une surface plane pour un matériau spéculaire donné, la demanderesse a démontré qu'une source ponctuelle G produisait une spécularité de forme elliptique. L'intersection des différents cônes de révolution de sommets $P_1$, $P_2$ et $P_3$ (centres optiques du capteur) donne une sphère de rayon r. Ce rayon r est associé à une intensité et à la réflectance du matériau donné.

Une analogie peut être faite entre le modèle et un résultat issu de l'aspect ondulatoire de la lumière. En effet, d'après le principe de Huygens, la lumière se propage sous forme d'ondelettes. Une source de lumière est considérée comme isotrope, i.e. elle émet des ondes lumineuses qui se propagent le long des rayons dans toutes les directions : en chacun des points de l'espace proche de la source et gagné par l'onde lumineuse, l'état du champ électromagnétique oscille (à la fréquence de la source), entre une valeur maximale et une valeur minimale. A un instant donné, tous les points situés à une distance identique de la source sont dans le même état : ils sont « en phase ». L'enveloppe des points situés à même distance de la source épouse une forme sphérique dans l'espace. La surface de cette sphère s'appelle le front d'onde qui peut être considéré comme une source secondaire associée à la source primaire.

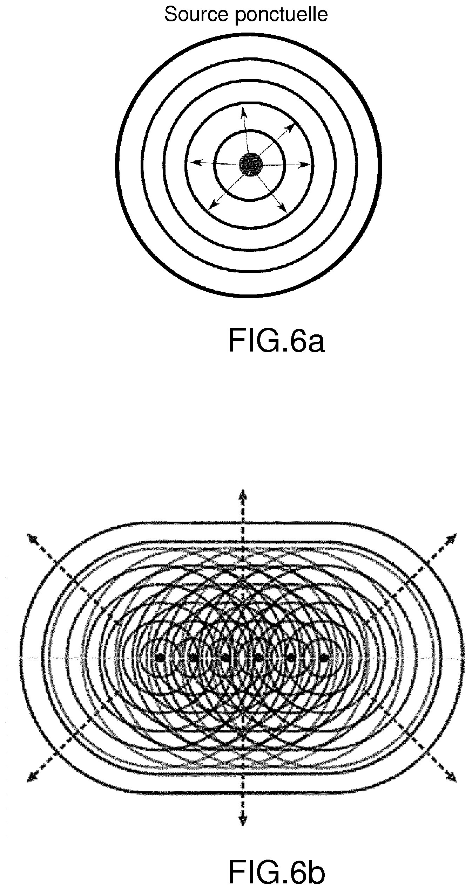

On peut noter que pour une même source, il existe plusieurs fronts d'onde comme montré figure 6a où chaque cercle correspond à un front d'onde émis par la source centrale dans toutes les directions. Dans le modèle virtuel on peut faire une analogie avec les fronts d'onde en considérant que pour chaque matériau la spécularité observée sur sa surface va matérialiser un niveau de front d'onde différent.

Pour une source étendue telle qu'un néon :

En infographie, il est commun de représenter une source étendue par un ensemble de points (sources ponctuelles). Ainsi un néon est représenté par un ensemble de points répartis sur un segment. Pour ces points les ondes décrites par une sphère, sont indépendantes et proviennent de chaque source ponctuelle. L'interférence de ces ondes sphériques selon le principe de Huygens-Fresnel va donner un nouveau front d'onde dont l'enveloppe externe peut être généralisée par un ellipsoïde comme illustré figure 6b.

Ainsi, pour une source étendue de lumière, le modèle représente cette source par un ellipsoïde par analogie avec la forme du front d'onde. Ces observations permettent de généraliser le modèle de source lumineuse virtuelle en utilisant une quadrique qui peut aussi bien représenter une sphère, un ellipsoïde, un cylindre voire un point.

On rappelle quelques généralités sur la construction d'une quadrique à partir de coniques.

On va présenter le processus d'initialisation de quadrique à partir de coniques après avoir présenté le formalisme des coniques et quadriques.

Une quadrique est une surface à 9 degrés de liberté représentée par une matrice symétrique $Q \in \mathbb{R}^{4 \times 4}$ telle que tout point X sur sa surface suit l'équation :

$$X^T Q X = 0,$$

où X est un point 3D en coordonnées homogènes.

Le contour occultant d'une quadrique dans le plan image, pour une pose de capteur donnée, correspond à une conique qui est un contour avec 5 degrés de liberté et est représentée par une matrice symétrique $C \in \mathbb{R}^{3 \times 3}$ telle que tout point x sur son contour suit la contrainte :

$$x^T C x = 0,$$

avec x un point 2D en coordonnées homogènes.

Afin d'exprimer C en fonction de Q, l'espace dual est utilisé au lieu de l'espace primai car la relation entre C et Q n'est pas directe dans l'espace primal. Utiliser l'espace dual pour la reconstruction 3D permet de se dispenser de l'information de profondeur. Dans cet espace, les coniques sont représentées en utilisant des lignes l telles que :

$$l^T C^* l = 0,$$

avec C* la conique duale.

Pour une quadrique duale Q*, on utilise une représentation du plan π décrit par la relation :

$$\pi^T Q^* \pi = 0.$$

Dans l'espace dual, on peut utiliser la relation suivante :

$$C^* \sim P Q^* P^T,$$

à un facteur d'échelle près et avec Q* = adj (Q), C* = adj (C) avec adj l'adjoint (=matrice des cofacteurs transposée).

On utilise la méthode décrite dans la publication de Cross et al. Quadric « reconstruction from dual-space geometry » in International Conférence on Computer Vision, ICCV, 1998, qui permet de reconstruire Q* en transformant la relation liant Q* et C* en un système linéaire. En vectorisant Q, P et C sous la forme $Q_v$, B et $C_v$, nous pouvons reconstruire un système en utilisant les réflexions spéculaires sous forme de coniques C et le modèle de la source lumineuse sous la forme Q pour n points de vue avec n ≥ 3 :

$$Mw = 0 \iff$$

$$\begin{pmatrix} B_1 & -C_{1,v}^* & 0 & \dots & 0 \\ B_2 & 0 & -C_{2,v}^* & & 0 \\ \vdots & 0 & 0 & \ddots & \vdots \\ B_n & 0 & 0 & \dots & -C_{n,v}^* \end{pmatrix} \begin{pmatrix} Q_v^* \\ \alpha_1 \\ \alpha_2 \\ \vdots \\ \alpha_n \end{pmatrix} = 0,$$

avec la matrice

$$B_i \in \mathbb{R}^{6 \times 10}.$$

La solution de ce système est calculée à partir d'une décomposition en valeur singulières (SVD) de M. On peut noter que $\alpha_i$ correspond à un facteur d'échelle tel que :

$$\alpha_i C_{i,v}^* = B_i Q_{i,v}^*$$

pour le point de vue i.

Ce processus est illustré figure 5 pour trois points de vue ; la sphère de rayon r est construite à partir des trois ellipses respectivement associées aux trois spécularités. La sphère de rayon r inclut l'intensité de la source lumineuse et des propriétés du matériau de la surface sur laquelle se présentent les spécularités. Les cônes de révolution indiqués en pointillé sur la figure et respectivement issus des points $P_i$, ne sont pas explicitement calculés pour déterminer la quadrique.

Cette étape est réalisée pour chaque source de lumière indexée. Le suivi de spécularité dans les images permet une première construction du modèle de chaque source de lumière, de manière indépendante. A l'issue de cette étape on a construit des quadriques représentant chacune une source lumineuse.

F. Optimisation

Cette phase permet l'affinement de la construction du modèle de source lumineuse (pour chacune des sources lumineuses), par une minimisation de la distance entre les projections de la quadrique et les contours des spécularités de chaque image sur les différents points de vue. L'optimisation repose sur la minimisation d'une fonction de coût non linéaire qui permet ainsi de faire correspondre au mieux les ellipses issues des projections avec les spécularités correspondantes dans les images et pour toutes les sources lumineuses. Cette fonction de coût peut être calculée différemment selon la distance choisie.

F.1. Distance de Jaccard

La distance de Jaccard évalue la similitude entre deux ensembles (aire de la spécularité S délimitée par un trait plein et aire de la conique (ellipse dans notre exemple) projetée C délimitée par un pointillé) comme montré figure 7b où l'on peut voir chacune des deux aires et leur intersection, selon l'équation :

$$J(C,S) = \frac{|C \cap S|}{|C \cup S|}$$

avec C une conique et S une spécularité détectée dans une image.

Fonction de coût de Jaccard :

L'objectif de cette fonction de coût est de maximiser la similitude entre la surface de la spécularité et la conique issue de la projection de la quadrique pour tous les points de vue.

La fonction de coût est décrite par l'équation :

$$\underset{Q_k}{Max} \sum_{i=1}^{n} J(C'_{i,k}, S_{i,k})$$

avec $S_i$ les pixels spéculaires dans l'image et $C'_i$ la conique pour l'image d'indice i et la source de lumière d'indice k.

F.2. Distance Point/Point pour la fonction de coût

Une distance point/conique entre le contour d'une spécularité et celui de sa conique projetée associée n'est pas utilisable en l'état. En effet, calculer la distance entre un point et une conique implique le calcul d'une racine d'ordre 4 d'un polynôme, ce qui est coûteux en temps de calcul et ne permet pas de réaliser des dérivées analytiques.
La solution souhaitée est d'obtenir une paramétrisation de la conique en points respectivement associés à chaque point de contour, similaire à l'approche décrite dans la publication de P. Sturm and P. Gargallo « Conic fitting using the geometric distance » In Asian Conférence on Computer Vision, ACCV.2007.
Différents calculs de fonction de coût sont possibles pour cette distance point/point illustrée figure 7a. On en présente deux.

- Fonction de coût avec la distance point/point

L'objectif de cette fonction de coût est de minimiser toutes les distances euclidiennes « d » entre les projections Ci de la quadrique Q pour un point de vue d'indice i en fonction de Q comme montré figure 7a. Cette distance est détaillée par l'équation :

$$\underset{Q_k}{\min} \sum_{i=1}^{n} \sum_{j=1}^{m_i} d(q'_{i,j}, q_{i,j,k})$$

avec $q'_{i,j,k}$ le point (représenté par un rond plein) d'indice j de contour de la spécularité S d'indice i et $q_{i,j,k}$ le point issu de la paramétrisation de la conique C (représenté par une croix) d'indice i. On réalise cette opération pour la source de lumière k.
Dans le cas de la fonction de coût pour la distance point/point, la discrétisation de conique doit être faite à chaque itération.

- Une autre solution est d'utiliser des variables latentes afin de conserver les mêmes paires de points (spécularité/conique) au lieu de recalculer cet appareillement pour chaque itération. Cependant, la contrainte à imposer est d'avoir les variables latentes ne pouvant évoluer que sur le contour de sa conique associée. Or un point d'une conique est défini par la relation :

$$x^{\top} C x = 0,$$

avec C une conique et x un point 2D en coordonnées homogènes.

Ainsi on peut réécrire la fonction de coût sous la forme :

$$\begin{cases} \underset{Q_k, q_{1,1}, \ldots, q_{n,m_i}}{\min} & \sum_{i=1}^{n} \sum_{j=1}^{m_i} d(q'_{i,j,k}, q_{i,j,k}), \\ \text{subject to} & q'_{i,j,k} C_j q'^{\top}_{i,j,k} = 0 \end{cases}$$

On peut noter que la quadrique à affiner est en général représentée par une matrice

$$Q \in \mathbb{R}^{4 \times 4}$$

telle que : $X^T Q X = 0$, avec X un point 3D appartenant à la surface de la quadrique.

Cette quadrique peut également être représentée en représentation paramétrique (centre de la quadrique, échelle de chaque axe, rotation selon chaque axe).

A l'issue de cette étape on a construit des quadriques affinées représentant chacune un modèle de source lumineuse. Lorsque plusieurs quadriques coïncident, elles représentent alors un modèle de même source lumineuse.

G. Prédiction de spécularité :

Une fois le modèle construit et affiné, on peut directement projeter ce modèle dans le plan image $\pi_i$ afin de prédire la spécularité Sp sur une nouvelle image courante acquise à partir du capteur avec une position P et une orientation nouvelles mais connues, et avec le même matériau. Cette fonction est particulièrement utile dans le domaine de la réalité augmentée. La projection de la quadrique (modélisée) sur cette nouvelle image donne une conique délimitant la zone prédite de la spécularité.

Bien que le modèle soit applicable pour un matériau donné, on peut estimer une spécularité définie à un facteur près pour une autre surface planaire de matériau spéculaire différent de celui du modèle mais à normale connue : le centre de la conique projetée indique le centre de la zone prédite pour la spécularité, les dimensions de la spécularité étant celles de la conique à un facteur d'échelle près. On peut noter également que pour des objets complexes, en discrétisant le contour occultant de la quadrique pour un point de vue inconnu, on peut par lancer de rayon prédire le contour de la spécularité sur cet objet.

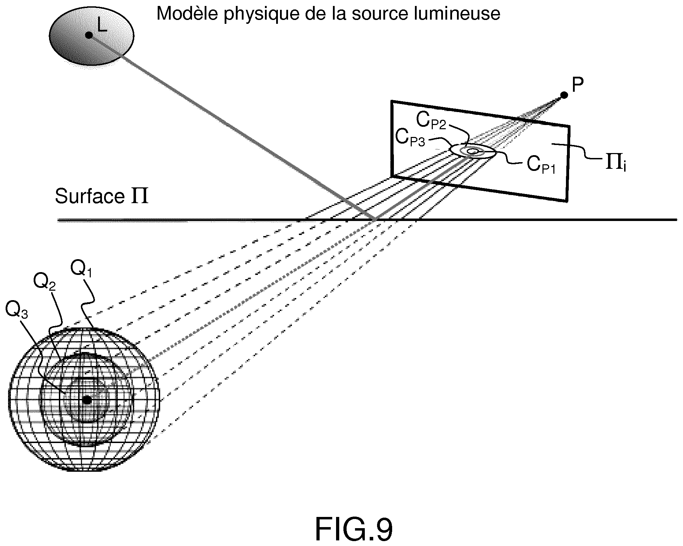

De manière générale, la spécularité possède différents niveaux d'intensité. En effet, la spécularité possède une zone d'intensité maximale à partir de laquelle l'intensité décroit à mesure que l'on s'éloigne de cette zone. Dans notre modèle, les différents niveaux d'intensité sont tous représentés par des coniques comme montré figure 8 avec 4 coniques Cp1, Cp2, Cp3, Cp4 (donc 4 niveaux d'intensité). Il est alors important de noter que celles-ci ne sont pas concentriques comme on peut le voir sur cette figure. Le procédé de prédiction de spécularité permet d'estimer le contour englobant de la spécularité Sp à partir de la projection stricte de la quadrique, ainsi que les différents niveaux d'intensité de la spécularité en projetant des quadriques de différentes échelles, comme présenté figure 9 pour 3 échelles de quadriques. Les 3 quadriques concentriques $Q_1$, $Q_2$, $Q_3$ (illustrant les 3 échelles de quadrique) projetées dans le plan image $\pi_i$ produisent 3 coniques (prédites) Cp1, Cp2, Cp3 correspondant à 3 niveaux d'intensité de la spécularité prédite Sp. Par conséquent, notre modèle permet aussi de prédire la zone d'intensité maximale de la spécularité.

H. Correction de la position et de l'orientation du capteur

Lorsqu'on a effectué une prédiction de spécularité à partir du modèle construit et éventuellement affiné, on peut également corriger d'éventuelles erreurs de position et d'orientation du capteur à partir d'un calcul d'écart entre une spécularité présente dans l'image associée à ladite position et ladite orientation et une conique résultant de la projection de la quadrique modélisée sur ladite image. En pratique, cette étape est réalisée en utilisant une des fonctions de coût citées précédemment avec comme paramètre de minimisation la position et l'orientation de la caméra ; on calcule cette fonction de coût à partir du contour de la spécularité détectée et utilisée pour construire le modèle de la source et du contour de la spécularité prédite.

Le procédé a été implémenté (détection avec suivi temporel de spécularités, reconstruction de quadrique et affinement non-linéaire) et validé qualitativement et quantitativement sur des séquences de synthèse et des séquences réelles. Ces tests ont été réalisés dans des environnements complexes avec différentes sources de lumière (ampoules et néons) pour des objets (exemples : table, cuisine, tableau, livre, ...) de matériaux différents (acier, plastique, bois vernis, porcelaine). Les séquences réalisées mettent en avant la précision du procédé concernant la prédiction des taches spéculaires sur des points de vue non utilisés pour la reconstruction. De plus, le flux vidéo est traité en temps réel (30 images par seconde en moyenne) par l'approche proposée.

Pour toutes les applications de réalité augmentée, de localisation de capteur, de contrôle qualité de surface, etc, la vision par ordinateur utilisant un procédé selon l'invention, offre alors une solution peu couteuse, pratique et non invasive.

Ce procédé de traitement d'images présentant des spécularités peut s'implémenter à partir d'images obtenues par un capteur apte à se déplacer (ou plusieurs capteurs fixes) et localisé(s) dans une scène, et à partir d'un modèle 3D géométrique de cette scène.

Ce procédé peut notamment s'implémenter à partir d'un produit programme d'ordinateur, ce programme d'ordinateur comprenant des instructions de code permettant d'effectuer les étapes du procédé de traitement des images acquises par le capteur. Il est enregistré sur un support lisible par ordinateur, comme par exemple un ordinateur disposant

EP 3 304 047 B1

du modèle 3D géométrique de la scène et des positions et orientations du capteur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention selon la portée des revendications suivantes.

## Revendications

1. Procédé de traitement d'images d'une scène incluant une surface constituée d'un matériau de réflectance inconnue, le procédé comprenant les étapes suivantes :

   - à partir d'au moins 3 positions différentes d'un capteur d'images, les positions et orientations correspondantes du capteur étant connues, acquisition d'images de la scène éclairée par une source lumineuse, chaque image présentant au moins une spécularité (S) issue de la réflexion de la source lumineuse sur ladite surface et dépendant de la position de la source, de la forme de la source, de l'intensité de la source lumineuse et de la réflectance du matériau,
   - dans chaque image, détection de chaque spécularité (S),
   - pour chaque spécularité, estimation d'une conique (C) approximant ladite spécularité,

   **caractérisé en ce qu'**il comprend l'étape suivante :
   construction d'une quadrique (Q) représentant la position de la source, l'intensité de la source et la forme de la source lumineuse ainsi que la réflectance du matériau, à partir des coniques, et aussi de la position et de l'orientation du capteur d'images lors de l'acquisition des images présentant les spécularités respectivement approximées par ces coniques.

2. Procédé de traitement d'images selon la revendication précédente, la surface présentant une rugosité inconnue, la quadrique (Q) représente aussi la rugosité de la surface.

3. Procédé de traitement d'images selon l'une des revendications précédentes, **caractérisé en ce que** la scène est éclairée par au moins une autre source lumineuse, chaque image présentant au moins une spécularité issue de la réflexion de chaque autre source lumineuse sur ladite surface, et **en ce qu'**il comprend en outre pour chaque spécularité :

   - un suivi temporel de la spécularité (S) et
   - une mise en correspondance de ladite spécularité (S) et donc de la conique l'approximant, avec une source lumineuse,

   et **en ce que** l'étape de construction d'une quadrique (Q) est réalisée pour chaque source lumineuse, à partir des coniques mises en correspondance avec ladite source lumineuse, de la position et de l'orientation du capteur d'images lors de l'acquisition des images présentant les spécularités respectivement approximées par ces coniques.

4. Procédé de traitement d'images selon l'une des revendications précédentes, **caractérisé en ce qu'**il comporte en outre les étapes suivantes :

   - pour chaque spécularité (S), minimisation de distance entre la spécularité, et une conique résultant de la projection de la quadrique (Q) sur l'image présentant ladite spécularité, selon un axe déterminé par la position et l'orientation du capteur, pour déterminer une nouvelle quadrique,
   - itérations de l'étape précédente jusqu'à atteindre un critère d'arrêt prédéterminé, la nouvelle quadrique résultant de la dernière itération étant une quadrique affinée.

5. Procédé de traitement d'images selon l'une des revendications précédentes, **caractérisé en ce qu'**il comporte une étape de choix d'images clés parmi les images acquises, en fonction d'un critère prédéfini de répartition de points de vue du capteur dans la scène, par rapport à la source lumineuse.

13

6. Procédé de traitement d'images selon l'une des revendications précédentes, **caractérisé en ce qu'**une source lumineuse est ponctuelle et **en ce que** la quadrique correspondante est une sphère.

7. Procédé de traitement d'images selon l'une des revendications 1 à 5, **caractérisé en ce qu'**une source lumineuse est étendue et **en ce que** la quadrique correspondante est un ellipsoïde.

8. Procédé de traitement d'images selon l'une des revendications précédentes, **caractérisé en ce qu'**il comporte une étape de calcul de prédiction de la position et de la forme d'une conique dite conique prédite (Cp1, Cp2, Cp3) approximant une spécularité (Sp) formée sur une surface constituée d'un matériau de normale connue, en fonction d'une nouvelle position et d'une nouvelle orientation dudit capteur d'images lors de l'acquisition d'une nouvelle image et de la projection de la quadrique sur ladite nouvelle image.

9. Procédé de traitement d'images selon la revendication précédente, **caractérisé en ce que** des échelles de quadrique étant prédéterminées, le calcul de prédiction de conique est réalisé pour chaque échelle de manière à obtenir autant de coniques (Cp1, Cp2, Cp3) que d'échelles, chaque conique correspondant à un niveau d'intensité de la spécularité prédite (Sp).

10. Procédé de traitement d'images selon, l'une des revendications 8 ou 9, **caractérisé en ce que** le matériau de la spécularité prédite est le même que le matériau associé à la quadrique, et **en ce que** la taille de la spécularité prédite est également prédite,

11. Procédé de traitement d'images selon l'une des revendications précédentes, **caractérisé en ce qu'**il comporte une étape de correction d'erreur de position et d'orientation du capteur d'images à partir d'un calcul d'écart entre une spécularité présente dans l'image associée à ladite position et orientation et une conique résultant de la projection de la quadrique sur ladite image.

12. Procédé de traitement d'images selon l'une des revendications précédentes, **caractérisé en ce que** les positions et orientations différentes du capteur d'images sont obtenues à partir d'un même capteur d'images se déplaçant ou à partir de plusieurs capteurs d'images fixes.

13. Un produit programme d'ordinateur, ledit programme d'ordinateur comprenant des instructions de code permettant à partir:

> - d'au moins 3 positions différentes d'un capteur d'images, les positions des instructions de code et orientations correspondantes du capteur étant connues, et
> - d'images de la scène incluant une surface constituée d'un matériau de réflectance inconnue, éclairée par une source lumineuse, acquises par ledit capteur d'images, chaque image présentant au moins une spécularité (S) issue de la réflexion de la source lumineuse sur ladite surface et dépendant de la position de la source, de la forme de la source, de l'intensité de la source lumineuse et de la réflectance du matériau,

d'effectuer les étapes suivantes, lorsque ledit programme est exécuté sur un ordinateur :

> - dans chaque image, détection de chaque spécularité (S),
> - pour chaque spécularité, estimation d'une conique (C) approximant ladite spécularité,
> - construction d'une quadrique (Q) représentant la position de la source, l'intensité de la source et la forme de la source lumineuse ainsi que la réflectance du matériau, à partir des coniques, et aussi de la position et de l'orientation du capteur d'images lors de l'acquisition des images présentant les spécularités respectivement approximées par ces coniques.

14. Un produit programme d'ordinateur selon la revendication précédente, comprenant des instructions de code permettant d'effectuer les étapes des revendications 2 à 12.


**Patentansprüche**

1. Verfahren zur Verarbeitung von Bildern einer Szene, welche eine Oberfläche beinhaltet, welche aus einem Material unbekannten Reflexionsvermögens besteht, wobei das Verfahren folgende Schritte beinhaltet:

- anhand von mindestens 3 unterschiedlichen Positionen eines Bildsensors, wobei die entsprechenden Positionen und Ausrichtungen des Sensors bekannt sind, Erfassen von Bildern der durch eine Leuchtquelle beleuchteten Szene, wobei jedes Bild mindestens einen Glanzfleck (S) aufweist, welcher aus der Reflexion der Lichtquelle auf der Oberfläche stammt und von der Position der Quelle, der Form der Quelle, der Intensität der Leuchtquelle und dem Reflexionsvermögen des Materials abhängig ist,
- in jedem Bild, Erkennen eines jeden Glanzflecks (S),
- für jeden Glanzfleck, Schätzen eines Kegelschnittes (C), welcher den Glanzfleck approximiert,

**dadurch gekennzeichnet, dass** es folgenden Schritt beinhaltet:
Konstruktion einer Quadrik (Q), welche die Position der Quelle, die Intensität der Quelle und die Form der Leuchtquelle sowie das Reflexionsvermögen des Materials darstellt, anhand der Kegelschnitte, und ebenfalls der Position und der Ausrichtung des Bildsensors beim Erfassen der Bilder, welche die jeweils durch diese Kegelschnitte approximierten Glanzflecken darstellen.

2. Verfahren zur Verarbeitung von Bildern nach dem vorhergehenden Anspruch, wobei die Oberfläche eine unbekannte Rauheit aufweist, wobei die Quadrik (Q) ebenfalls die Rauheit der Oberfläche darstellt.

3. Verfahren zur Verarbeitung von Bildern nach einem der vorhergehenden Ansprüche, **dadurch gekennzeichnet, dass** die Szene durch mindestens eine andere Leuchtquelle beleuchtet wird, wobei jedes Bild mindestens einen Glanzfleck aus der Reflexion einer jeden anderen Lichtquelle auf der Oberfläche aufweist, und dadurch, dass es zudem für jeden Glanzfleck Folgendes beinhaltet:

- eine zeitliche Verfolgung des Glanzflecks (S) und
- eine Abstimmung des Glanzflecks (S) und folglich des diesen approximierenden Kegelschnittes, mit einer Leuchtquelle,

und dadurch, dass der Schritt des Konstruierens einer Quadrik (Q) für jede Leuchtquelle anhand der mit der Leuchtquelle abgestimmten Kegelschnitte, der Position und der Ausrichtung des Bildsensors beim Erfassen der Bilder, welche die jeweils durch diese Kegelschnitte approximierten Glanzflecken aufweisen, erfolgt.

4. Verfahren zur Verarbeitung von Bildern nach einem der vorhergehenden Ansprüche, **dadurch gekennzeichnet, dass** es zudem folgende Schritte beinhaltet.

- für jeden Glanzfleck (S), Minimieren des Abstandes zwischen dem Glanzfleck und einem Kegelschnitt, welcher aus der Projektion der Quadrik (Q) auf das den Glanzfleck aufweisende Bild resultiert, entlang einer durch die Position und die Ausrichtung des Sensors bestimmten Achse, um eine neue Quadrik zu bestimmen,
- Wiederholungen des vorhergehenden Schrittes bis zum Erreichen eines vorbestimmten Stopp-Kriteriums, wobei die neue aus der letzten Wiederholung resultierende Quadrik eine verfeinerte Quadrik ist.

5. Verfahren zur Verarbeitung von Bildern nach einem der vorhergehenden Ansprüche, **dadurch gekennzeichnet, dass** es einen Schritt der Auswahl von Schlüsselbildern unter den erfassten Bildern angesichts eines vordefinierten Kriteriums der Verteilung der Blickpunkte des Sensors in der Szene in Bezug auf die Lichtquelle beinhaltet.

6. Verfahren zur Verarbeitung von Bildern nach einem der vorhergehenden Ansprüche, **dadurch gekennzeichnet, dass** eine Lichtquelle punktuell ist und dadurch, dass die entsprechende Quadrik eine Kugel ist.

7. Verfahren zur Verarbeitung von Bildern nach einem der Ansprüche 1 bis 5, **dadurch gekennzeichnet, dass** eine Lichtquelle erweitert ist und dadurch, dass die entsprechende Quadrik eine Ellipsoid ist.

8. Verfahren zur Verarbeitung von Bildern nach einem der vorhergehenden Ansprüche, **dadurch gekennzeichnet, dass** es einen Schritt des Berechnens der Position und der Form eines Kegelschnittes beinhaltet, genannt vorhergesagter Kegelschnitt (Cpl, Cp2, Cp3), welcher einen Glanzfleck (Sp) approximiert, welcher auf einer Oberfläche gebildet ist, welche aus einem Material mit bekannter Normale besteht, angesichts einer neuen Position und einer neuen Ausrichtung des Bildsensors beim Erfassen eines neuen Bildes und der Projektion der Quadrik auf das neue Bild.

9. Verfahren zur Verarbeitung von Bildern nach einem der vorhergehenden Ansprüche, **dadurch gekennzeichnet, dass**, da Maßstäbe von Quadriken vorbestimmt sind, die Vorhersageberechnung von Kegelschnitten für jeden Maßstab durchgeführt wird, um ebenso viele Kegelschnitte (Cpl, Cp2, Cp3) wie Maßstäbe zu erzielen, wobei jeder Kegelschnitt einem Intensitätspegel des vorhergesagten Glanzflecks (Sp) entspricht.

10. Verfahren zur Verarbeitung von Bildern nach einem der Ansprüche 8 oder 9, **dadurch gekennzeichnet, dass** das Material des vorhergesagten Glanzflecks dasselbe wie das mit der Quadrik verbundene Material ist, und dadurch, dass die Größe des vorhergesagten Glanzflecks ebenfalls vorhergesagt wird.

11. Verfahren zur Verarbeitung von Bildern nach einem der vorhergehenden Ansprüche, **dadurch gekennzeichnet, dass** es einen Schritt der Fehlerkorrektur der Position und der Ausrichtung des Bildsensors anhand einer Abweichungsberechnung zwischen einem in dem Bild vorhandenen Glanzfleck, welcher mit der Position und der Ausrichtung verbunden ist, und einem Schnittkegel, welcher aus der Projektion der Quadrik auf das Bild resultiert, beinhaltet.

12. Verfahren zur Verarbeitung von Bildern nach einem der vorhergehenden Ansprüche, **dadurch gekennzeichnet, dass** die unterschiedlichen Positionen und Ausrichtungen des Bildsensors anhand eines selben Bildsensors erzielt werden, welcher sich bewegt, oder anhand mehrerer fester Bildsensoren.

13. Computerprogrammprodukt, wobei das Computerprogramm Codeanweisungen beinhaltet, welche anhand folgender Elemente Folgendes ermöglichen:

- von mindestens 3 unterschiedlichen Positionen eines Bildsensors, wobei die Positionen und die Ausrichtungen des Sensors bekannt sind, und
- von Bildern der Szene, welche eine Oberfläche enthält, welche aus einem Material unbekannten Reflexionsvermögens besteht, welche durch eine Leuchtquelle beleuchtet wird, welche durch den Bildsensor erfasst werden, wobei jedes Bild mindestens einen Glanzfleck (S) aufweist, welcher aus der Reflexion der Lichtquelle auf der Oberfläche stammt und von der Position der Quelle, der Form der Quelle, der Intensität der Leuchtquelle und dem Reflexionsvermögen des Materials abhängig ist,

Ausführen folgender Schritte, wenn das Programm auf einem Computer ausgeführt wird:

- in jedem Bild, Erkennen eines jeden Glanzflecks (S),
- für jeden Glanzfleck, Schätzen eines Kegelschnittes (C), welcher den Glanzfleck approximiert,
- Konstruieren einer Quadrik (Q), welche die Position der Quelle, die Intensität der Quelle und die Form der Leuchtquelle sowie das Reflexionsvermögen des Materials darstellt, anhand der Kegelschnitte, und ebenfalls der Position und der Ausrichtung des Bildsensors beim Erfassen der Bilder, welche die jeweils durch diese Kegelschnitte approximierten Glanzflecken darstellen.

14. Computerprogrammprodukt nach dem vorhergehenden Anspruch, welches Codeanweisungen beinhaltet, welche es ermöglichen, die Schritte der Ansprüche 2 bis 12 auszuführen.

**Claims**

1. A method for processing images of a scene including a surface made of a material of unknown reflectance, the method comprising the following steps:

- from at least 3 known different positions of an image sensor, the respective positions and orientations being known, acquiring images of the scene illuminated by a light source, each image containing at least one specularity (S) generated by reflection of the light source from said surface and depending on the position of the source, on the shape of the source, on the intensity of the light source and on the reflectance of the material;
- in each image, detecting each specularity (S);
- for each specularity, estimating a conic (C) approximating said specularity; **characterized in that** it further comprises the following step:
- constructing a quadric (Q) representing the position of the source, the intensity of the source and the shape of the light source and the reflectance of the material, on the basis of the conics, and of the position and orientation of the image sensor during the acquisition of the images containing the specularities respectively approximated by these conics.

2. The image-processing method according to the preceding claim, the surface having an unknown roughness, the quadric (Q) also represents the roughness of the surface.

3. The image-processing method according to any of the preceding claims, **characterized in that** the scene is illuminated by at least one other light source, each image containing at least one specularity generated by reflection of each other light source on said surface, and **in that** it further comprises for each specularity:

   - temporal tracking of the specularity (S) and
   - matching said specularity (S), and therefore the conic approximating it, with a light source,

   and **in that** the step of constructing a quadric (Q) is carried out for each light source, on the basis of the conics matched with said light source, of the position and orientation of the image sensor during the acquisition of the images containing the specularities respectively approximated by these conics.

4. The image-processing method according to any of the preceding claims, **characterized in that** it further includes the following steps:

   - for each specularity (S), minimizing the distance between the specularity and a conic resulting from projecting the quadric (Q) onto the image containing said specularity along an axis determined by the position and orientation of the sensor, in order to determine a new quadric;
   - iterating the preceding step until a preset stop criterion is reached, the new quadric resulting from the last iteration being a refined quadric.

5. The image-processing method according to any of the preceding claims, **characterized in that** it includes a step of choosing key images from the acquired images, depending on a predefined criterion of distribution of viewpoints of the sensor in the scene with respect to the light source.

6. The image-processing method according to any of the preceding claims, **characterized in that** a light source is a point light source and **in that** the corresponding quadric is a sphere.

7. The image-processing method according to any of claims 1 to 5, **characterized in that** a light source is an extended light source and **in that** the corresponding quadric is an ellipsoid.

8. The image-processing method according to any of the preceding claims, **characterized in that** it includes a step of calculating a prediction of the position and shape of a conic called the predicted conic (Cpl, Cp2, Cp3) approximating a specularity (Sp) formed on a surface made of a material of known normal, depending on a new position and a new orientation of said image sensor during the acquisition of a new image and on the projection of the quadric onto said new image.

9. The image-processing method according to the preceding claim, **characterized in that** quadric scales being preset, the conic prediction calculation is carried out for each scale so as to obtain as many conics (Cpl, Cp2, Cp3) as scales, each conic corresponding to an intensity level of the predicted specularity (Sp).

10. The image-processing method according to any of claims 8 or 9, **characterized in that** the material of the predicted specularity is the same as the material associated with the quadric, and **in that** the size of the predicted specularity is also predicted.

11. The image-processing method according to any of the preceding claims, **characterized in that** it includes a step of correcting error in the position and orientation of the image sensor on the basis of a calculation of a discrepancy between a specularity present in the image associated with said position and orientation and a conic resulting from the projection of the quadric onto said image.

12. The image-processing method according to any of the preceding claims, **characterized in that** the different positions and orientations of the image sensor are obtained using the same moving image sensor or using a plurality of stationary image sensors.

13. A computer-program product, said computer program comprising code instructions allowing, on the basis of:

- at least 3 different positions of an image sensor, the respective positions and orientations of the sensor being known, and
- images of the scene including a surface made of a material of unknown reflectance, illuminated by a light source, acquired by said image sensor, each image containing at least one specularity (S) generated by reflection of the light source on said surface and dependent on the position of the source, on the shape of the source, on the intensity of the light source and on the reflectance of the material,

the following steps to be carried out when said program is executed on a computer:

- in each image, detecting each specularity (S);
- for each specularity, estimating a conic (C) approximating said specularity;
- constructing a quadric (Q) representing the position of the source, the intensity of the source and the shape of the light source and the reflectance of the material, on the basis of the conics, and of the position and orientation of the image sensor during the acquisition of the images containing the specularities respectively approximated by these conics.

14. A computer-program product according to the preceding claim, comprising code instructions allowing the steps of claims 2 to 12 to be carried out.

FIG.1

FIG.2

FIG.3

FIG.4

FIG.5

Source ponctuelle

FIG.6a

FIG.6b

S

C

FIG.7a

S

C

FIG.7b

$C_{P4}$

$C_{P3}$

$C_{P2}$

$C_{P1}$

FIG.8

Modèle physique de la source lumineuse

L

P

$C_{P2}$

$C_{P3}$

$C_{P1}$

$\Pi_i$

Surface $\Pi$

$Q_1$

$Q_2$

$Q_3$

FIG.9

## RÉFÉRENCES CITÉES DANS LA DESCRIPTION

**Documents brevets cités dans la description**

- US 2014307951 A1

**Littérature non-brevet citée dans la description**

- Generic and real-time détection of specular reflections in images. *VISAPP,* 2014
- **SUZUKI ; SATOSHI.** Topological structural analysis of digitized binary images by border following. *Computer Vision, Graphics, and Image Processing,* 1985, vol. 30 (1), 32-46
- **PHONG et al.** Illumination for computer generated pictures. *Communications of the ACM,* 1975, vol. 18 (6), 311-317
- **J. VAN MAANEN.** Seventeenth century instruments for drawing conic sections. *The Mathematical Gazette,* 1992, 222-230

- **L.G. KHACHIYAN ; M.J. TODD.** On the complexity of approximating the maximal inscribed ellipsoid for a polytope. *Math. Programming,* 1993, vol. 61, 137-159
- **A. W. FITZGIBBON ; R. B. FISHER et al.** A buyer's guide to conic fitting. *DAI Research paper,* 1996
- **CROSS et al.** reconstruction from dual-space geometry. *International Conférence on Computer Vision, ICCV,* 1998
- **P. STURM ; P. GARGALLO.** Conic fitting using the geometric distance. *Asian Conférence on Computer Vision, ACCV,* 2007